(19) Europäisches Patentamt
European Patent Office
Office européen des brevets

(11) **EP 2 254 338 B1**

(12) **EUROPEAN PATENT SPECIFICATION**

(45) Date of publication and mention
of the grant of the patent:
**17.10.2018  Bulletin 2018/42**

(51) Int Cl.:
***H04N 19/46*** (2014.01)     ***H04N 19/122*** (2014.01)
***H04N 19/117*** (2014.01)     ***H04N 19/635*** (2014.01)

(21) Application number: **09290375.6**

(22) Date of filing: **20.05.2009**

(54) **Coding and decoding methods and devices, computer program and information carrier enabling the implementation of such methods**

Kodierungs- und Dekodierungsverfahren und -vorrichtungen, Computerprogramm und Informationsträger, der die Umsetzung solcher Verfahren ermöglicht

Procédés et dispositifs de codage et décodage, programme informatique et support d'informations permettant de mettre en ?uvre de tels procédés

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**24.11.2010  Bulletin 2010/47**

(73) Proprietor: **Canon Kabushiki Kaisha Tokyo (JP)**

(72) Inventors:
 • **Henry, Félix**
   **35700 Rennes (FR)**
 • **Gisquet, Christophe**
   **35000 Rennes (FR)**
 • **Corouge, Isabelle**
   **35000 Rennes (FR)**

(74) Representative: **Santarelli**
   **49, avenue des Champs-Elysées**
   **75008 Paris (FR)**

(56) References cited:
   **EP-A2- 1 146 748     EP-A2- 1 911 293**
   **FR-A1- 2 906 093**

 • **DAVID S TAUBMAN; MICHAEL W MARCELLIN: "JPEG2000, Image Compression Fundamentals, Standards and Practice; Passages" 2002, KLUWER ACADEMIC PUBLISHERS , US NORWELL , XP002558533 * page 176 - page 183 * * page 396 * * page 427 - page 431 * * sections 4.2.5 and 10.3.2 ** figure 4.15 ***
 • **TAUBMAN D ET AL: "Orientation adaptive subband coding of images" PROCEEDINGS OF THE INTERNATIONAL SYMPOSIUM ON CIRCUITS AND SYSTEMS. (ISCS). CHICAGO, MAY 3 - 6, 1993; [PROCEEDINGS OF THE INTERNATIONAL SYMPOSIUM ON CIRCUITS AND SYSTEMS. (ISCS)], NEW YORK, IEEE, US, vol. -, 3 May 1993 (1993-05-03), pages 271-274, XP010115155 ISBN: 978-0-7803-1281-4**
 • **BAMBERGER R H ET AL: "A FILTER BANK FOR THE DIRECTIONAL DECOMPOSITION OF IMAGES: THEORY AND DESIGN" IEEE TRANSACTIONS ON SIGNAL PROCESSING, IEEE SERVICE CENTER, NEW YORK, NY, US, vol. 40, no. 4, 1 April 1992 (1992-04-01), pages 882-893, XP000301415 ISSN: 1053-587X**
 • **MARTIN VETTERLI: "Wavelets, Approximation, and Compression" IEEE SIGNAL PROCESSING MAGAZINE, IEEE SERVICE CENTER, PISCATAWAY, NJ, US, vol. 18, no. 5, 1 September 2001 (2001-09-01), pages 59-73, XP011092359 ISSN: 1053-5888**

**Description**

The present invention relates to a coding method and device, a computer program implementing this method and an information carrier enabling the implementation of such method.

The present invention generally relates to the digital processing of signals, and, more particularly, the compression and decompression of multidimensional digital signals, in particular signals representing still or moving images.

In the case, for example, of a digital camera, a digital image is constituted by a set of N x M pixels, or picture elements, where N is the height of the image, in pixels, and M the width of the image, in pixels. The image is generally coded before being stored in memory. The initial data, that is to say the information representing the pixel values of the image, are organized in a bi-dimensional array, which is, for example, accessible row by row.

However, prior to its coding, a digital image undergoes a transformation consisting of applying filtering to the whole or part of a digital image. Reciprocally, after the decoding of a coded digital image, the image undergoes a transformation that is inverse to the filtering applied before the coding. The filtering implemented during the initial transformation is a convolution between the image signal and a predetermined vector enabling, for each pixel of the region to which it applies, its value to be modified on the basis of the values of the neighboring pixels, to which coefficients or weightings are allocated.

The document EP 1911293 discloses a method of filtering a multi-dimensional signal using oriented filters. For each filter, a filter orientation is chosen from a plurality of possible orientations. The method proposed in EP1911293 takes into account local variations of the multidimensional signal so as to increase the filtering performance. The orientations, determined for each sample of the multidimensional signal to be filtered according to an optimization criterion, need to be transmitted along with the coded signal in order for this signal to be decoded.

It is known from FR 2 906 093 to use one sub-band of lower resolution to determine the orientations used for the filtering of all sub-bands generated during the sub-band decomposition. More particularly, in FR 2 906 093, only the low frequency sub-band of immediately lower resolution than the resolution currently being filtered is used to determine orientations,. Therefore, there is no need to transmit supplementary information. However the filter orientations are not accurate enough.

One of the objects of the present invention is to mitigate some of these drawbacks.

The present invention relates to, in particular, increasing the compression rate at equivalent quality, or, conversely, increasing the quality of the image at the same compression rate.

According to a first aspect, the present invention discloses a method of coding a multi-dimensional digital signal as defined in independent claim 1.

It should be noted that the multidimensional digital signal may be a sub-band obtained by decomposition of another multi-dimensional digital signal.

By generating intermediate sub-bands of intermediate resolution, which, in turn, are used to determine the orientations of some of the sub-bands of the second, or lower, resolution, the present invention improves the quality of the orientations, since the intermediate sub-bands are richer in content than the lower resolution sub-band. The improved quality of the orientations produces a more favourable rate-distortion compromise when the sub-band transform is used for the purpose of digital signal compression.

According to the present invention, more information is provided at the time of determining orientations as compared to the prior art method since the present invention provides for determining orientations based on a sub-band of intermediate resolution and not of lower resolution.

As compared to the teaching of document FR 2 906 093, in the present invention, more sub-bands are combined together to form intermediate sub-bands, such intermediate sub-bands being used to determine the orientations. This improves the quality of the orientations, resulting, at the end, in better compression efficiency of the original signal.

The advantages of using the method of the present invention thus include reaching a higher compression/visual quality compromise as compared to the prior art methods, with little or no additional complexity.

The errors introduced by the encoding of the said sub-sampled low-pass filtered sub-band are taken into account when determining the orientation, leading to a better accuracy of the orientations.

A better quality of reconstruction of the intermediate resolution sub-band using oriented filtering is obtained, thanks to the use of second orientations.

The errors introduced by the encoding of the third sub-band of the second resolution are taken into account when determining the orientation, leading to a better accuracy of the orientations.

The method of coding according to the invention allows reducing the encoding cost of the sub-bands, because sub-bands of lower amplitude require less data to be encoded.

According to one example at least one step of determining orientations comprises determining a context function describing the orientations, the context function being applicable to the sub-band to analyse to obtain a context value for each sample of said sub-band to analyse.

This is particularly advantageous since a context function is a very compact way of describing the orientations.

Therefore this feature contributes to obtaining a very compact code for the orientations.

The method of coding according to the invention allows efficient decomposition of the original signal since all sub-bands are decomposed using oriented filtering.

The second intermediate sub-band of the intermediate resolution is generated using all information available at this time, and therefore leading to a more efficient decomposition.

The method of coding according to the invention allows using oriented filtering when generating at least one second sub-band of the second resolution, thus improving the overall efficiency of the decomposition from a compression point of view.

Strictly the same orientations are used during reconstruction, thus ensuring the highest possible quality of the decoded signal.

According to a second aspect, the present invention relates to a device for coding a multi-dimensional digital signal as defined in independent claim 7.

According to a third aspect, an example relates to a method of decoding a multi-dimensional digital.

According to a fourth aspect, an example relates to a device for decoding a multi-dimensional digital signal.

According to a fifth aspect, the present invention relates to a computer program loadable into a computer system, said program containing instructions which cause the computer to carry out the steps of the method of coding as set forth above, when that program is loaded and executed by a computer system.

According to a sixth aspect, the present invention relates to an information carrier readable by a computer or a microprocessor, removable or not, comprising instructions of a computer program, which, when executed by the computer or the microprocessor, cause the computer to carry out the steps of the method of coding as set forth above.

As the advantages, objectives and characteristics of this coding device, of this computer program and of this information carrier are similar to those of the coding method, as set forth above, they are not repeated here.

Other advantages, objectives and features of the present invention will emerge from the following description, given, with an explanatory purpose that is in no way limiting, with reference to the accompanying drawings in which:

- Figure 1 is a flowchart of image coding, transmission and decoding method steps;
- Figure 2 is a representation of oriented filters on an array of pixels of an image;
- Figure 3 is a representation of a particular embodiment of the devices of the present invention;
- Figure 4 is a flowchart of steps performed in a particular embodiment of the coding method of the present invention;
- Figure 5 is a representation of sub-bands of an image being compressed;
- Figure 6 is a flowchart of steps performed in a particular example of the decoding method of the present invention,
- Figure 7 is a representation of sub-bands of an image being decompressed and
- Figure 8 illustrates an example of filtering according to eight predefined geometric orientations, able to be used by the filtering method according to the present invention, in a particular embodiment.

In all the description, the words "signal", "multi-dimensional signal" and "image" have the same meaning.

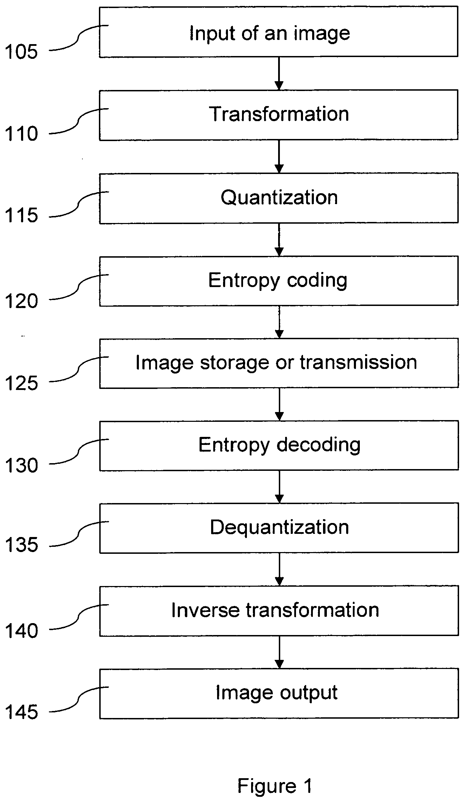

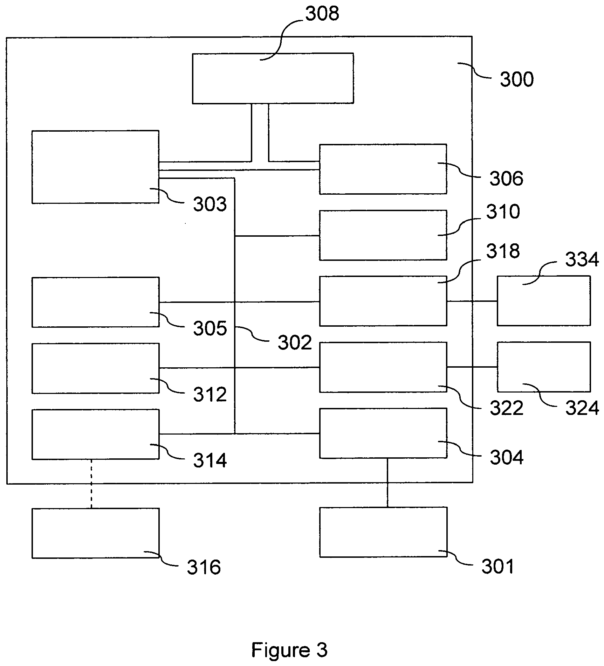

Before describing the features of the methods and devices of the present invention, a description will be given with reference to Figure 1, of the successive steps of compression and transmission of an image. These steps may be implemented by a device of the present invention, for example as described in Figure 3.

First of all, in Figure 1, a step 105 of inputting a digital image adapted to be compressed for storage or transmission is performed. This step 105 may, according to the applications of the present invention, be carried out by loading an image file from a memory or from a computer network or by capturing an image, for example by making use of a digital camera or of a digital camcorder.

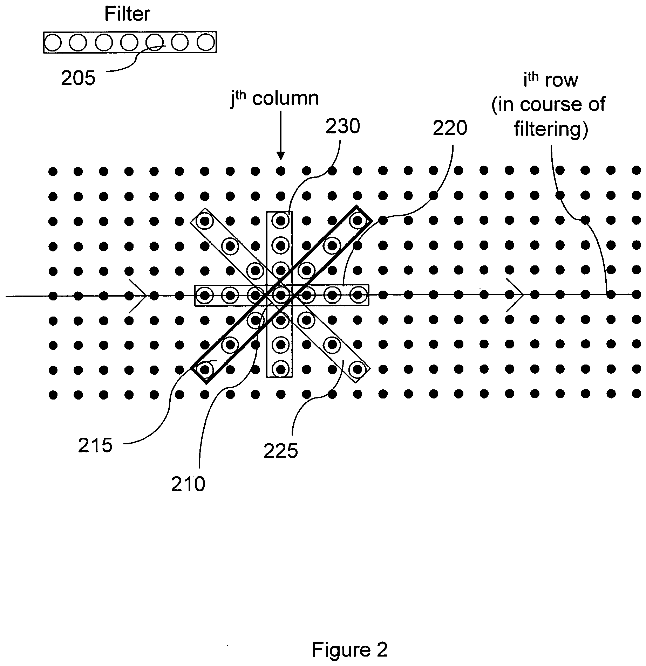

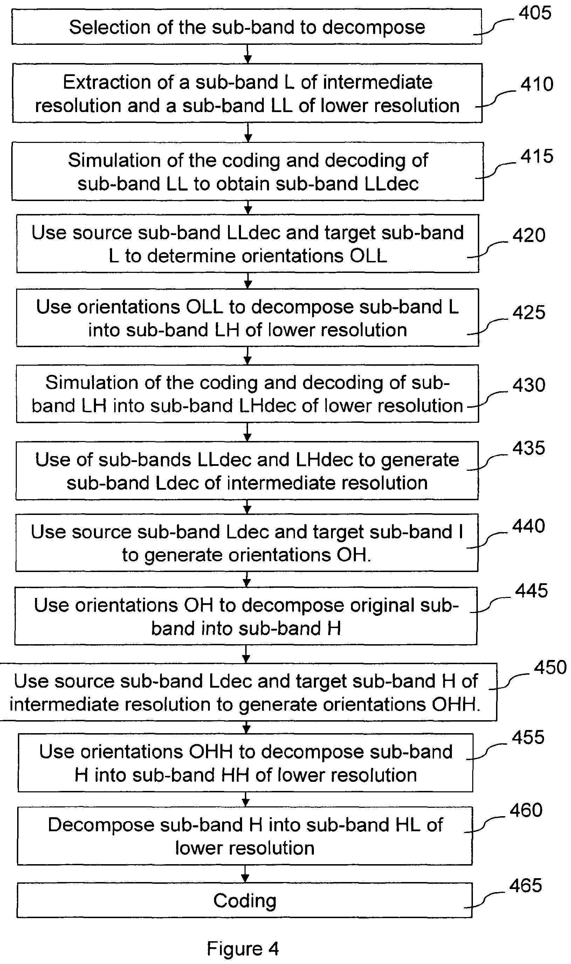

The image is then transformed, during a transformation step 110, to obtain a filtered image formed of selected filtered samples, preferably associated with information representing filters. Step 110 is detailed with reference to Figures 2 and 4, in a particular embodiment of the coding method of the present invention.

Next, the filtered image is quantized, during a quantization step 115, and then coded during an entropy coding step 120, according to techniques known per se. The image thus compressed is stored in memory or transmitted, during step 125.

The coding method of the present invention is implemented in particular in the transform step 110. The steps of quantization and entropy coding may use standard means.

In Figure 1, it is assumed that step 125 leads to transmission of the compressed image.

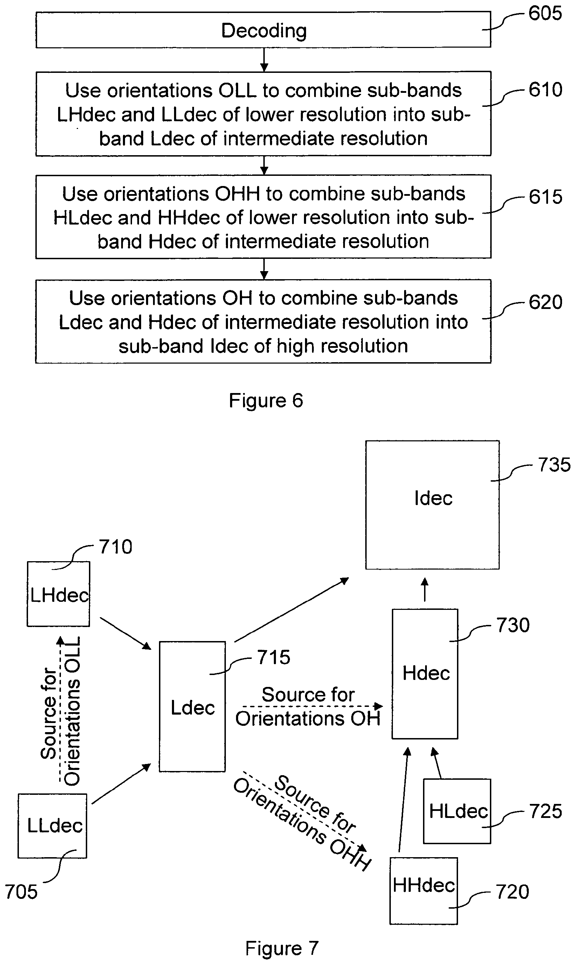

After reception, and possibly storage in memory, the received coded image successively undergoes a step of entropy decoding 130, of dequantization, or inverse quantization, 135 and of transformation that is inverse to the transformation carried out during step 110, during step 140 detailed with reference to Figure 6. The image obtained at the end of these steps is the decompressed image which is output, for example to be stored, transmitted or displayed, during a step 145.

The decoding method of the present invention is implemented in particular in the inverse transform step 140.

The final image is the decompressed image.

Generally, the present invention makes it possible to code a digital signal with several dimensions. In a preferred embodiment described with reference to the drawings, the coding and the decoding are applied to a still digital image, which is a bi-dimensional signal. However, the present invention applies similarly to signals which have a higher number of dimensions, for example the signals representing a video (three dimensions).

In a preferred embodiment, filtering is used that performs a decomposition into frequency sub-bands aimed at compressing the digital image. This is because such filtering, also called "wavelet decomposition" or "sub-band filtering", is widely used, for example in the JPEG2000 standard, and provides good compression efficiency.

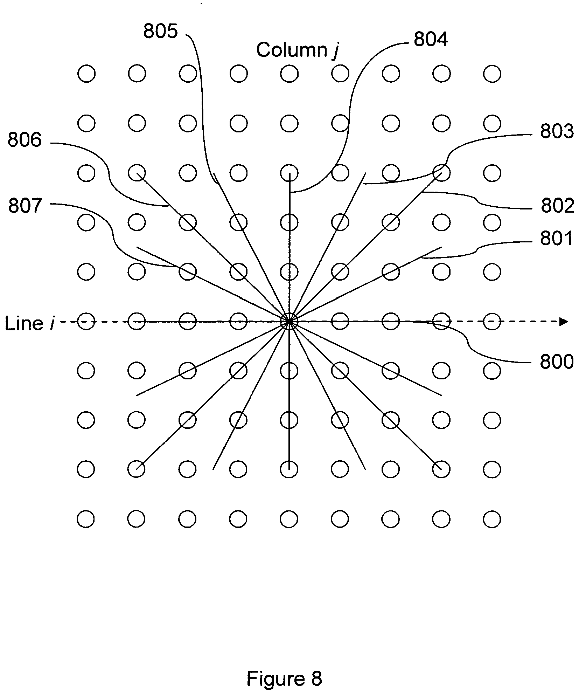

However, the embodiment of the present invention described with reference to the Figures differs from the filtering as used in JPEG2000 since the filters used may be oriented, as illustrated in Figures 2 and 8.

The orientation of each filtering operation is determined on the basis of information available on decoding. In a preferred embodiment, additional information making it possible to improve orientation determination is transmitted from the coding device to the decoding device (see, for example, the context functions and values described below). This additional information to be transmitted to the decoder can be efficiently compressed so as to achieve a very good rate-distortion compromise.

In particular embodiments, that additional information is not transmitted to the decoding device, which, at equal quality, makes it possible to increase the compression rate or, at equal compression rate, reduce the differences between the image to code and the image that is compressed and then decomposed.

Figure 3 shows a particular embodiment of the device of the present invention, coder and/or decoder 300, and different peripherals adapted to implement each aspect of the present invention. In the embodiment illustrated in Figure 3, the device 300 is a micro-computer of known type connected, in the case of the coder, via a graphics card 304, to a means for acquisition or storage of images 301, for example a digital camera or a scanner, adapted to provide image information to compress.

The device 300 comprises a communication interface 318 connected to a network 334 able to transmit, as input, digital data to compress or decompress and, as output, data compressed or decompressed by the device. The device 300 also comprises a storage means 312, for example a hard disk, and a drive 314 for a floppy disk 316. The floppy disk 316 and the storage means 312 may contain data to compress or decompress, compressed or decompressed data and a computer program adapted to implement the method of coding or decoding of the present invention.

According to a variant, the program enabling the device to implement the present invention is stored in ROM (read only memory) 306. In another variant, the program is received via the communication network 334 before being stored.

The device 300 is, optionally, connected to a microphone 324 via an input/output card 322. This same device 300 has a screen 305 for viewing the data to be to compressed or decompressed or for serving as an interface with the user for parameterizing certain operating modes of the device 300, using a keyboard 310 and/or a mouse for example.

A CPU (central processing unit) 303 executes the instructions of the computer program and of programs necessary for its operation, for example an operating system. On powering up of the device 300, the programs stored in a non-volatile memory, for example the read only memory 306, the hard disk 312 or the floppy disk 316, are transferred into a random access memory RAM 308, which will then contain the executable code of the program of the present invention as well as registers for storing the variables necessary for its implementation.

Naturally, the floppy disk 316 may be replaced by any type of removable information carrier, such as a compact disc, memory card or key. In more general terms, an information storage means, which can be read by a computer or microprocessor, integrated or not into the device, and which may possibly be removable, stores a program of the present invention. A communication bus 302 affords communication between the different elements included in the device 300 or connected to it. The representation, in Figure 3, of the bus 302 is non-limiting and in particular the central processing unit 303 unit may communicate instructions to any element of the device 300 directly or by means of another element of the device 300.

The device described here and, particularly, the central processing unit 303, may implement all or part of the processing operations described with reference to Figures 4 to 7, to implement each method of the present invention and constitute each device of the present invention.

In a preferred embodiment, a set of filters is used performing decomposition into frequency sub-bands, also called "sub-band filtering", in order to compress the image. Sub-band filtering consists in applying a number of filters to an original signal of initial resolution in order to decompose it into a set of frequency sub-bands. The sub-bands generated correspond to a lower resolution than the initial resolution.

It is well known to select one of the sub-bands of lower resolution to further decompose it into a set of sub-bands of even lower resolution. This process can be iterated a number of times. In the present description, we only describe what happens during the decomposition of one original sub-band into the set of sub-bands of lower resolution (also called "coding") and during the reconstruction of the original sub-band from the sub-bands of lower resolution (also called "decoding").

It should be noticed that a usual sub-band frequency transform such as the wavelet transform or sub-band filtering takes an input image of a first resolution, and produces four sub-bands of second resolution lower than the first resolution. This is achieved by first applying horizontal filtering using high-pass and low-pass filters, and sub-sampling the result by a factor of two in the horizontal dimension. This produces two intermediate sub-bands of intermediate resolution having low horizontal resolution and initial vertical resolution. One intermediate sub-band is a low frequency sub-band and the other intermediate sub-band is a high frequency sub-band.

Then each of the two intermediate sub-bands are filtered and sub-sampled along the vertical direction in order to produce four final sub-bands of lower resolution in each direction. These four sub-bands correspond to signals of:

- low frequency in both dimension, usually called "LL sub-band",
- low frequency in the horizontal dimension and high frequency in the vertical dimension, usually called "LH sub-band",
- low frequency in the vertical dimension and high frequency in the horizontal dimension, usually called "HL sub-band" and
- high frequency in both dimensions, usually called "HH sub-band".

It has to be noticed that vertical and horizontal dimensions can be interchanged (for instance, one can start by vertically filtering to obtain the two intermediate sub-bands, and then horizontally filtering each of the intermediate sub-bands to obtain the four sub-bands of lower resolution).

However, the present invention differs from the JPEG2000 standard or the wavelet transform because the filters used can be oriented, so as to better take into account the local variations of the image signal.

Such oriented filters are described with reference to Figures 2 and 8.

The current filter 205 is illustrated in Figure 2, which attributes coefficients to the values of seven samples and which is applied to a multidimensional signal to replace the value of a sample 210 with the result of the application of that filter 205 to the sample 210. In the example represented, the current sample 210 is that corresponding to the $i^{th}$ row and the $j^{th}$ column.

In the embodiment illustrated in Figure 2, four possible geometric orientations 215, 220, 225 and 230 of the filter 205 are represented. By denoting the coefficient of the row number i and of the column number j as $x_{i,j}$, these four orientations correspond to the filtering of the following mono-dimensional signals.

$$\{x_{i-3,j-3}, x_{i-2,j-2}, x_{i-1,j-1}, x_{i,j}, x_{j+1,j+1}, x_{i+2,j+2}, x_{i+3,j+3}\}$$
$$\{x_{i,j-3}, x_{i,j-2}, x_{i,j-1}, x_{i,j}, x_{i,j+1}, x_{i,j+2}, x_{i,j+3}\}$$
$$\{x_{i+3,j-3}, x_{i+2,j-2}, x_{i+1,j-1}, x_{i,j}, x_{i-1,j+1}, x_{i-2,j+2}, x_{i-3j+3}\}$$
$$\{x_{i-3,j}, x_{i-2,j}, x_{i-1,j}, x_{i,j}, x_{i+1,j}, x_{i+2,j}, x_{i+3,j}\}$$

which correspond respectively to orientations of 45° (orientation 225), 0° (orientation 220), -45° (orientation 215) and 90° (orientation 230). For each sample $x_{i,j}$ of a selected sub-band, one of these orientations is selected and the corresponding filter is applied.

It is noted that, in a preferred embodiment, there are eight possible orientations corresponding to angles almost uniformly distributed between -90° and 90°, as shown in Figure 8.

This Figure 8 illustrates the one-dimensional filtering of the line i, assuming that line number 0 is the bottom line of the image. The coefficient in the course of high-pass filtering is the $j^{th}$ coefficient of the line, assuming that the column 0 is the furthest to the left in the image. This coefficient is denoted $x_{i,j}$. When a conventional wavelet transformation is applied, the filter is applied to the coefficient vector $\{x_{i,j-3}, x_{i,j-2}, x_{i,j-1}, x_{i,j}, x_{i,j+1}, x_{i,j+2}, x_{i,j+3}\}$. This is illustrated by the segment numbered 800. Segments 801 to 807 represent the other possible orientations. For example, segment 802 represents the filtering of the vector $\{x_{i-3,j-3}, x_{i-2,j-2}, x_{i-1,j-1}, x_{i,j}, x_{i+1,j+1}, x_{i+2,j+2}, x_{i+3,j+3}\}$. It may happen that a segment does not directly intercept a coefficient, as is the case with the segment 801. In this case, an interpolation between the "accessible" coefficients is used, that is to say, in the present case, the coefficients which belong to an odd column of coefficients. Thus, for example, the segment 801 represents the filtering of the vector:

$$[(x(i-2,j-3)+x(i-1,j-3))/2, (x(i-1,j-1)+x(i,j1))/2, x(i,j), (x(i,j+1)+x(i+1,j+1))/2, (x(i+1,j+3)+x(i+2,j+3))/2].$$

The geometric orientation used for each sample of the selected sub-band SO is given by an image of the orientations: by filtering the sample of the selected sub-band SO located at coordinates (x,y), the predetermined orientation is used which is the closest to the orientation at the same coordinates (x,y) in the image of the orientations.

In particular embodiments, two filters are used. A first filter, known as a low-pass filter, has the role of extracting the low frequencies from the signal. The result of filtering a mono-dimensional signal, in other words formed of a series of samples $\{..., x_{i-3}, x_{i-2}, x_{i-1}, x_i, x_{i+1}, x_{i+2}, x_{i+3}, ...\}$ via the low-pass filter of which the coefficients are [-1/16, 0, 5/16, 1, 5/16, 0, -1/16] is provided by the following values $y_i = -x_{i-3}/16 + 5 * x_{i-1}/16 + x_i + 5 * x_{i+1}/16 - x_{i+3}/16$.

A second filter known as a high-pass filter extracts the high frequencies from the signal. The result of filtering a mono-dimensional signal $\{..., x_{i-3}, x_{i-2}, x_{i-1}, x_i, x_{i+1}, x_{i+2}, x_{i+3}, ...\}$ via the high-pass filter of which the coefficients are [1/16, 0, -9/16, 1, -9/16, 0, 1/16] is provided by the following values $y_i = x_{i-3}/16 - 9 * x_{i-1}/16 + x_i - 9 * x_{i+1}/16 + x_{i+3}/16$.

In these particular embodiments, only the high-pass filtering is oriented.

The high-pass and low-pass filters are used in decomposition according to the lifting scheme. For example, the odd samples of a line are high-pass filtered and the even samples of said line are low-pass filtered or vice-versa.

In the following, several embodiments describe how to obtain an image of orientations corresponding to a given sub-band S0, that is to say an orientation for each sample to filter of sub-band S0.

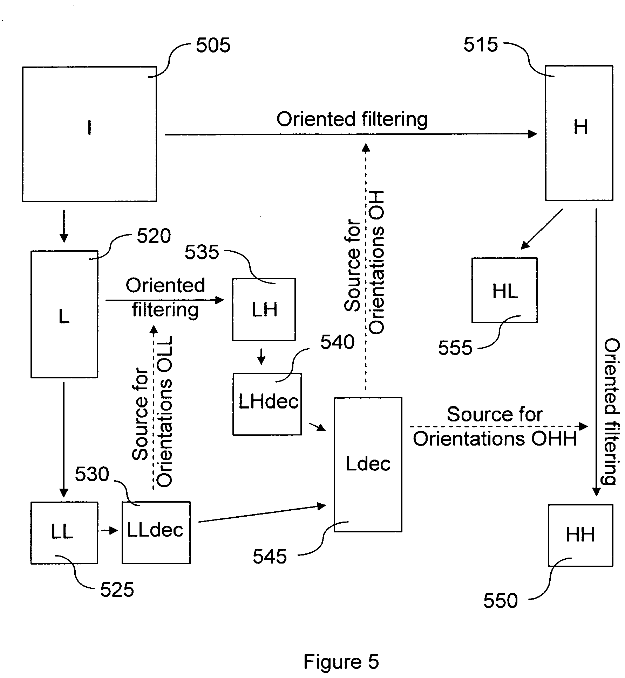

The coding steps are represented in Figures 4 and 5. During a step 405, selection is made of the image, or the multidimensional digital signal, to process. Next, during the step 405, selection is made of a sub-band to decompose. Said sub-band is first the original image I 505 of Figure 5. It is the initial signal to decompose (it also has the original or "first" resolution). If multiple decompositions are to be used, the multi-dimensional signal to decompose could be a sub-band coming from a previous sub-band decomposition, typically the "LL" sub-band 525 (see Figure 5).

Next, during a step 410, two sub-bands are generated, a first intermediate sub-band of intermediate resolution and low frequency called "L" 520, and one sub-band of lower or "second" resolution and low frequency in both dimensions called "LL" 525. The intermediate resolution is lower than the first resolution, for example one half of it, and higher than the second resolution, for example twice it. This step is performed using standard means, the filters not being oriented. For example, the first filter (low-pass filter) described above with respect to Figure 2 can be applied. In the following, "intermediate sub-band" means "sub-band of intermediate resolution".

During a step 415, a simulation of coding and decoding of sub-band "LL" is performed. To obtain the decoded version of the "LL" sub-band, all the steps of coding and decoding that degrade the signal are applied. For instance, classically, the quantization stage introduces errors into the signal, so quantization and then dequantization are applied to the "LL" sub-band 525. This step 415 creates sub-band "LLdec" 530. Any form of quantization may be used, such as well-known uniform scalar quantization, or vector quantization. In alternative embodiments, during step 415, the LL sub-band is further decomposed into sub-sub-bands of even lower resolution, a simulation of coding and decoding of each one of said sub-sub-bands being performed and the sub-band LLdec is recomposed from the resulting sub-sub-bands. Taking into account the subsequent encoding of the LL sub-band leads to a better accuracy of the orientations.

During a step 420, the "LLdec" sub-band 530 and the "L" sub-band are used to determine the orientations "OLL". The orientations "OLL" are the ones that will be used to extract a high-pass filtered sub-band 535 from the filtering of the "L" intermediate sub-band 520.

Basically this determination consists in analyzing the "LLdec" 530 sub-band (called the "source" sub-band) to identify, for each pixel of the "L" intermediate sub-band 520 to be filtered, which orientation to use.

A preferred embodiment consists in determining a context function that can be applied to the sub-band "LLdec" 530 to obtain a context value for each sample. Next, a filter orientation is associated with each context value in order to minimize the amplitude of the samples of the "L" intermediate sub-band 520 (also called the "target" sub-band) when filtered using said orientations. It should be noted that the orientation associated with each context value is coded and transmitted to the decoding device.

Therefore, each time orientations are determined in this preferred embodiment, a source sub-band is needed to extract the context value and a target sub-band, the one being filtered, is needed. For each sample of the target sub-band, an orientation has to be obtained before applying the oriented filtering.

In a preferred embodiment, the orientation of the filter applied to a sample is determined by the value of a context function at the position of the sample. The context function examines the values of the low-frequency sub-band or source sub-band of resolution immediately lower than that of the sub-band currently being filtered. For example, for a sample of coordinates (i,j) in the target sub-band "L" 520, the positions surrounding the sample in the source sub-band "LLdec" 530 of coordinates (i/2, j) are used for the calculation of the context values.

In general terms, the coordinates (i/2, j) are taken to be equal to the integer part below the real value of (i/2, j).

Context samples around a sample "X" situated at coordinates (k,l) in the low-frequency sub-band of resolution immediately lower than that of the sub-band currently being filtered and corresponding to the sample to be filtered are called A, B, C, D. For example, A represents the value of the sample located at coordinates (k-1, l-1), B represents the value of the sample located at coordinates (k-1, l+1), C represents the value of the sample located at coordinates (k+1, l-1) and D represents the value of the sample located at coordinates (k+1, l+1). The values of these samples belong to the sub-band of immediately lower resolution. It should be noted that these are not the original values of the samples but of their decoded values, for the purpose of avoiding the propagation of errors. The values of A, B, C, D are thus the same during coding and during decoding. The sample currently being filtered is called "X".

In a preferred example embodiment of the present invention, six possible context functions are used. These context functions are as follows:

$$f_1(X) = 0 \text{ if } A<B-T, \ 1 \text{ if } |A - B| \le T, \ 2 \text{ if } B<A-T \ ;$$

$$f_2(X) = 0 \text{ if } A<C-T, \ 1 \text{ if } |A - C| \le T, \ 2 \text{ if } C<A-T \ ;$$

$$f_3(X) = 0 \text{ if } A<D-T, \ 1 \text{ if } |A - D| \le T, \ 2 \text{ if } D<A-T \ ;$$

$$f_4(X) = 0 \text{ if } B<C-T, \ 1 \text{ if } |B - C| \le T, \ 2 \text{ if } C<B-T \ ;$$

$$f_5(X) = 0 \text{ if } B<D-T, \ 1 \text{ if } |B - D| \le T, \ 2 \text{ if } D<B-T \ ;$$

$$f_6(X) = 0 \text{ if } C<D-T, \ 1 \text{ if } |C - D| \le T, \ 2 \text{ if } D<C-T \ ;$$

where T is a predefined threshold (for example, T= 5% of the signal dynamics).

Thus each context function can take only three values, "0", "1" and "2". These values are called context values.

The concept of orientation table is now explained. An orientation table is a look-up table (LUT) that associates a filter orientation value with a context value. Knowing that the context functions take only three values (0, 1 and 2), an orientation table is simply a list of three orientations.

The orientation table is used to determine the orientation that must be applied to a sample. For example, the notation [4,0,1] for an orientation table means that a sample X must be filtered with the orientation 4 if the context function of this sample takes the value "0" at the position of X, with the orientation "0" if the context function takes the value "1" at X and with the orientation "1" if the context function takes the value "2" at X.

The sub-band currently being processed, which is the "L" intermediate sub-band 520 at step 420, is decomposed into blocks (for example square blocks). For each block of the sub-band currently being processed, a step consists of calculating a coding cost and an orientation table for each context function. It is necessary for this purpose to proceed with the determination of the optimal orientation table for a given context function $f_i$.

For this purpose, the context value is first of all calculated for each sample in the current block, applying the context function $f_i$ to each pixel of the block and storing the result.

Next, the samples corresponding to each of the context values "0", "1" and "2" are separated. This produces three groups of samples, called sub-signals, corresponding respectively to the three context values.

Then, for each of these three groups of samples, the optimal filtering orientation is determined, by simulating the filtering of all the samples in the group in all possible orientations, eight in the non-limiting example illustrated in the Figure 8, and by selecting the orientation that minimises the amplitude sum of the output of the filters over the group in question. The orientation thus selected is considered to be the optimal orientation. It is the orientation that minimises the quantity of energy produced in the block, for the samples of the group in question.

In a variant, to determine the optimal filtering orientation, it would also be possible to minimise the sum of the squares of the output amplitudes of the filters, or to minimise the absolute value of the output amplitudes of these filters.

Next the orientation table that consists simply of the list of optimal orientations calculated during the previous step is constructed, these orientations being ordered according to the increasing values of the context values.

The amplitude sum of the output of the filters over a group of samples as defined above represents the coding cost of this group. Consequently the sum of the coding costs of the three groups (which correspond to the context values "0", "1" and "2") of the block represents the coding cost of the context function $f_i$ on the current block.

As explained above, the coding cost of each context function $f_1, f_2, ..., f_6$ is therefore calculated and the optimal orientation table and the coding cost associated with each context function are stored.

The following step consists in determining the best context function and the optimal orientation table that corresponds to it. The best context function is defined as the one that has the lowest coding cost. This context function and its corresponding optimal orientation table are associated with the current block of the sub-band currently being processed. For each block, an optimal context function $f_i$ and an optimal orientation table [X,Y,Z] are calculated as explained above. Therefore, the coding cost of the context functions is minimized.

Finally, step 420 provides the "OLL" orientations, which may either be stored in memory as an orientation value for each pixel of the "L" intermediate sub-band 520 to be filtered, or which may be calculated from information stored in memory, such as the optimal context function and the corresponding orientation table for each block of the "L" intermediate sub-band 520 to be filtered.

In a preferred embodiment, there are eight possible orientations (see Figure 8), so each orientation value is a number between "0" and "7" indicating which one of the eight possible orientations is selected.

During a step 425, the orientations "OLL" are used to filter the "L" intermediate sub-band 520 with a high-pass filter, in order to produce sub-band "LH" 535. This is achieved using oriented filters similarly to what is described with regards to Figures 2 and 8.

During step 425, the filter to be applied is obtained from the orientations "OLL" determined in the step 420.

In a preferred embodiment, the orientations "OLL" are determined using context functions and corresponding orientation tables. Following the step 420 of determination of best context function and optimal orientation table for each block of the sub-band to be filtered, the oriented filtering is applied block by block.

For this purpose, the context function and the orientation table of the current block are first of all identified. For example, these information items are retrieved from memory. Then, for each sample of this block, the value of the context function is calculated (in the example given here, this value may be 0, 1 or 2) and the orientation table is used to determine the geometric orientation (in the example given here, a value between 0 and 7) associated with the context value that has been obtained. This orientation is used to filter the sample.

In an alternative embodiment, the values of geometric orientations have been stored in memory for each sample of the sub-band to be filtered. They are then read at step 425 and the corresponding filter is applied as explained above with reference to Figures 2 and 8.

For example, the filter called second filter in the example cited with reference to Figure 2 can be applied, oriented according to one of the possible orientations.

During a step 430, the coding and decoding of sub-band "LH" 535 are simulated to produce sub-band "LHdec" 540. This step is similar to step 415.

During a step 435, sub-bands "LLdec" 530 and "LHdec" 540 are used together with orientations "OLL" to reconstruct intermediate sub-band "Ldec" 545. This is achieved by inverse oriented filtering. It is similar to the well-known inverse wavelet transform, except that the filters are oriented, the orientations used being "OLL".

During a step 440, source sub-band "Ldec" 545 and target sub-band (or image) "I" 505 are used to determine the orientations "OH". This step is similar to step 420 above.

During a step 445, the orientations "OH" are used to filter sub-band "I" 505 with a high-pass filter, in order to produce a second intermediate sub-band "H" 515. This is achieved using oriented filters (see step 425).

During a step 450, source intermediate sub-band "Ldec" 545 and target "H" intermediate sub-band 515 are used to determine the orientations "OHH". This step is similar to step 420 above.

During a step 455, the orientations "OHH" are used to filter the "H" intermediate sub-band 515 with a high-pass filter, in order to produce sub-band "HH" 550. This is achieved using oriented filters (see step 425).

During a step 460, the "H" intermediate sub-band 515 is decomposed into sub-band "HL" 555 using a low-pass filter (which is not oriented).

At the end of step 460, the four sub-bands "LL" 525, "LH" 535, "HL" 555 and "HH" 550, and the corresponding orientations "OH", "OHH" and "OLL" have been obtained.

During a step 465, the four sub-bands "LL" 525, "LH" 535, "HL" 555 and "HH" 550 are coded using standard means (such as quantization and entropy coding) or further decomposed using sub-band decomposition as shown in Figure 4, and then coded or again decomposed. For example, only the sub-band "LL" 525 is further decomposed. The orientation signals "OH", "OHH" and "OLL" are coded using lossless coding, for example entropy coding.

When context functions are used to determine the orientations, the context functions are then gathered into a single signal that is compressed by conventional means. The orientation tables are grouped together in sub-signals corresponding respectively to the various context functions, and then each sub-signal is compressed independently.

Entropy coding may be carried out by means of Huffman coding or arithmetical coding. It will be noted that entropy coding is applied to the orientation information previously stored, without quantization.

In an alternative embodiment, during step 420, the filtering orientations "OLL" may be extracted from the edges of the source sub-band of lower resolution than the sub-band to be filtered. The same processing can be applied on the decoder side, so in this variant, there is no need to transmit any supplementary information regarding the orientations. In the present case, the source sub-band is sub-band "LLdec" 530.

Edge detection may be applied for example by Sobel filtering, well-known to the person skilled in the art (see http://homepages.inf.ed.ac.uk/rbf/HIPR2/sobel.htm). Sobel filtering consists in applying two bi-dimensional filtering operations to the image. The arctangent of the ratio of the outputs of these two filtering operations gives the local orientation of the edge. An image which, for each sample of the source sub-band of lower resolution signal, contains the orientation of the local edge, is thus created. The Sobel filtering operation gives the orientation of the orthogonal to the local edge. In a preferred embodiment, 90° is added to the result to obtain the orientation of the actual edge, which is assimilated to the orientation of its tangent and the geometric orientation of the filter closest to the orientation obtained is taken.

In variants, filtering is used other than that of Sobel, such as Robert Cross edge detection filtering.

The Sobel filter or any other well-known orientation detector is used on each pixel of the sub-band "LLdec" 530 to identify the local orientation of the signal, and applying this orientation at the same location in the "L" intermediate sub-band 520, taking into account that the "L" intermediate sub-band 520 is not of the same resolution as the sub-band "LLdec" 530. As explained above, a sample of coordinates (i,j) in "L" intermediate sub-band 520 corresponds to the sample of coordinates (i,j/2) in sub-band "LLdec" 530.

Similar processing is applied in steps 440 and 450 to generate orientations "OH" and "OHH".

In this variant, the orientation images "OLL", "OH" or "OHH" do not need to be coded during the coding step 465, since they can be determined at the decoder by applying analogous edge detection as on the encoder side.

The method of decoding the coded image will now be described with regards to Figures 6 and 7.

During a step 605, the four sub-bands "LLdec" 705, "LHdec" 710, "HLdec" 725 and "HHdec" 720 of second, lower, resolution are decoded using standard means (entropy decoding, dequantization). The orientation signals "OH", "OHH" and "OLL" are decoded using lossless decoding.

If the preferred embodiment of the coding method described above has been used, the main steps of the decoding of the bit stream constituting a sub-band first consists of decompressing the signal containing the context functions, using decoding means symmetrical with the means used during coding. The signal of the context functions thus becomes available and it becomes possible to determine the context function associated with each block.

In addition, the sub-signals containing the orientation tables associated with each context function are decoded independently.

Moreover, all the samples of the sub-band are decoded, for example by arithmetic decoding and scalar de-quantization, if arithmetic coding and scalar quantization were used on coding.

Next, the inverse filtering of each sample of the sub-band with the same orientation as that used for the direct filtering is performed. For this purpose, the sub-band is processed block by block and the following processing operations are applied to each block.

First of all, the context function associated with the block is read in the signal of the context functions decoded previously. Once it is identified, it becomes possible to read the orientation signal in the sub-signal corresponding to the context function that has just been read.

Next, for each sample, the orientation of the filter is identified by using the same process as that used on coding: the value of the context function (which, in the example given here, may be "0", "1" or "2") is calculated and the orientation table is used to determine the orientation (a value between "0" and "7", in the example given here) associated with the context value that has just been obtained. This orientation is used to perform the inverse oriented filtering of the sample. Once these processing operations have been applied to all the samples of the sub-band, a decoded sub-band is obtained.

During a step 610, sub-bands "LHdec" 710 and "LLdec" 705 are used together with orientations "OLL", to reconstruct a first intermediate sub-band "Ldec" 715. This is achieved by inverse oriented filtering.

During a step 615, sub-bands "HLdec" 725 and "HHdec" 720 are used, together with orientations "OHH", to reconstruct a second intermediate sub-band "Hdec" 730. This is achieved by inverse oriented filtering.

During a step 620, we use intermediate sub-bands "Ldec" 715 and "Hdec" 730, together with orientations "OH", to reconstruct sub-band "Idec" 735 of first, higher, resolution, which is actually the decoded image. This is achieved by inverse oriented filtering.

In the case of the alternative embodiment described with respect to figures 4 and 5, in which the filtering orientation is extracted via an edge detection on a source sub-band of lower resolution than the sub-band to be filtered, during step 605, the four sub-bands "LLdec" 705, "LHdec" 710, "HLdec" 725 and "HHdec" 720 of second, lower, resolution are decoded using standard means (entropy decoding, dequantization). The orientations "OLL" are then extracted from the decoded sub-band "LLdec" 705, using the same edge detector as at the encoder, for example the Sobel edge detector in the preferred embodiment. Next, step 610 is applied, as explained above, to obtain sub-band "Ldec" 715 of intermediate resolution. Sub-band "Ldec" 715 is then used as a source of orientations "OHH", which is used for inverse filtering sub-bands "HLdec" 725 and "HHdec" 720 in the subsequent step 615. The orientations "OHH" are determined by applying an edge detection filter on sub-band "Ldec" 715. Sub-band "Ldec" 715 is also used as a source of orientations "OH", which is used for inverse filtering the sub-bands "Ldec" 715 and "Hdec" 730 to produce the final subband (or final image) "Idec" 735. The orientations "OH" are determined by applying an edge detection filter on subband "Ldec" 715. Note that the edge detector may be applied to more samples of "Ldec" 715 as compared to step 615, because "Idec" 735 has higher resolution than "Hdec" 730.

**Claims**

1. A method of coding a multidimensional digital signal (505) of a first resolution into sub-bands (525, 535, 550, 555) of a second resolution that is lower than the first resolution, comprising the steps of:

   - generating (410) a first intermediate sub-band (520) of intermediate resolution by low-pass filtering the multidimensional digital signal (505) in a first dimension, the intermediate resolution being higher than the second resolution and lower than the first resolution;
   - generating (410) a first sub-band (525) of the second resolution by low-pass filtering the first intermediate sub-band (520) in the first dimension;

- coding and decoding in order to obtain (415) a decoded first sub-band (530) from the first sub-band (525);
- using (420) the first intermediate sub-band (520) and the decoded first sub-band (530) to determine first orientations (OLL) to be used to produce a high-pass filtered sub-band from the first intermediate sub-band (520);
- using (425) the first orientations (OLL) to high-pass filter the first intermediate sub-band (520) to produce a second sub-band (535) of the second resolution;
- coding and decoding in order to obtain (430) a decoded second sub-band (540) from the second sub-band (535);
- reconstructing (435) the first intermediate sub-band using the first decoded sub-band (530), the second decoded sub-band (540), and the first orientations (OLL) by inverse oriented filtering to obtain a reconstructed first intermediate sub-band (545);
- using (440) the reconstructed first intermediate sub-band (545) and the multidimensional digital signal (505) to determine second orientations (OH) for high-pass filtering the multidimensional digital signal (505) in the second dimension;
- generating (445) a second intermediate sub-band (515) of intermediate resolution by high-pass filtering the multidimensional digital signal (505) in the second dimension using the second orientations (OH);
- using (450) the reconstructed first intermediate sub-band (545) and the second intermediate sub-band (515) to determine third orientations (OHH) to be used to produce a high-pass filtered sub-band from the second intermediate sub-band (515);
- using (455) the third orientations (OHH) to high-pass filter the second intermediate sub-band (515) to obtain a third sub-band (550) of the second resolution; and
- generating (460) a fourth sub-band (555) of the second resolution by low-pass filtering the second intermediate sub-band (515).

2.  A method according to claim 1, wherein the steps (410, 415) of obtaining the decoded first sub-band (530) comprises:

    - a step (410) of using low-pass filter and sub-sampling in a first dimension of the multidimensional digital signal (505) followed by using low-pass filter and subsampling in a second dimension of the first intermediate sub-band, the second dimension being perpendicular to the first dimension, to obtain the first sub-band (525), which is a sub-sampled low-passed filtered sub-band, and
    - a step (415) of quantization and de-quantization of the sub-sampled low-pass filtered sub-band (525).

3.  A method according to any one of claims 1 to 2, wherein at least one step (420, 440, 450) of determining orientations comprises, for each sample of a sub-band to analyse, selecting an orientation that minimizes the amplitude of at least one sample of another sub-band when filtered using said orientation.

4.  A method according to any one of claims 1 to 3, wherein the steps (455, 460) of generating at least one of the third or fourth sub-bands (550, 555) of the second resolution based on the second or third orientations (OH, OHH) comprises a step (445, 455) of using high-pass-filters oriented based on the second or third orientations (OH, OHH) and sub-sampling in a dimension of the multidimensional digital signal (505).

5.  A method according to claim 1, wherein the step of generating (455) the third sub-band (550) comprises a step (455) of using high-pass-filters oriented based on the third orientations (OHH) on the second intermediate sub-band (515) and sub-sampling in a dimension of the multidimensional digital signal (505).

6.  A method according to any one of claims 1 to 5, further comprising a step (465) of coding the determined orientations (OLL, OH, OHH) using lossless coding.

7.  A device (300) for coding a multidimensional digital signal (505) of a first resolution into sub-bands of a second resolution that is lower than the first resolution, the device comprising means (303, 306, 312, 316) for:

    - generating (410) a first intermediate sub-band (520) of intermediate resolution by low-pass filtering the multidimensional digital signal (505) in a first dimension, the intermediate resolution being higher than the second resolution and lower than the first resolution;
    - generating (410) a first sub-band (525) of the second resolution by low-pass filtering the first intermediate sub-band (520) in the first dimension;
    - coding and decoding in order to obtain (415) a decoded first sub-band (530) from the first sub-band (525);
    - using (420) the first intermediate sub-band (520) and the decoded first sub-band (530) to determine first orientations (OLL) to be used to produce a high-pass filtered sub-band from the first intermediate sub-band (520);
    - using (425) the first orientations (OLL) to high-pass filter the first intermediate sub-band (520) to produce a second sub-band (535) of the second resolution;

- coding and decoding in order to obtain (430) a decoded second sub-band (540) from the second sub-band (535);
- reconstructing (435) the first intermediate sub-band using the first decoded sub-band (530), the second decoded sub-band (540) and the first orientations (OLL) by inverse oriented filtering to obtain a reconstructed intermediate sub-band (545);
- using (440) the reconstructed intermediate sub-band (545) and the multidimensional digital signal (505) to determine second orientations (OH) for high-pass filtering the multidimensional digital signal (505) in the second dimension;
- generating (445) a second intermediate sub-band (515) of intermediate resolution by high-pass filtering the multidimensional digital signal (505) in the second dimension using the second orientations (OH);
- using (450) the reconstructed first intermediate sub-band (545) and the second intermediate sub-band (515) to determine third orientations (OHH) to be used to produce a high-pass filtered sub-band from the second intermediate sub-band (515);
- using (455) the third orientations (OHH) to high-pass filter the second intermediate sub-band (515) to obtain a third sub-band (550) of the second resolution; and
- generating (460) a fourth sub-band (555) of the second resolution by low-pass filtering the second intermediate sub-band (515).

**8.** A computer program product loadable into a computer system (300), said program containing instructions which cause the computer to carry out the steps of the method of coding according to any one of claims 1 to 6 when that program is loaded and executed by the computer system.

**9.** An information carrier (306, 312, 316) readable by a computer (300) or a microprocessor (303), removable or not, comprising instructions of a computer program, which, when executed by the computer or the microprocessor, cause the computer or the microprocessor to carry out the steps of the method of coding according to any one of claims 1 to 6.

**Patentansprüche**

**1.** Verfahren zur Kodierung eines mehrdimensionalen digitalen Signals (505) einer ersten Auflösung in Unterbänder (525, 535, 550, 555) einer zweiten Auflösung, die niedriger als die erste Auflösung ist, mit den Schritten:

- Generierung (410) eines ersten Zwischen-Unterbandes (520) mit einer Zwischen-Auflösung durch Tiefpassfilterung des mehrdimensionalen digitalen Signals (505) in einer ersten Dimension, wobei die Zwischen-Auflösung höher ist als die zweite Auflösung und niedriger ist als die erste Auflösung;
- Generierung (410) eines ersten Unterbandes (525) der zweiten Auflösung durch Tiefpassfilterung des ersten Zwischen-Unterbandes (520) in der ersten Dimension;
- Kodierung und Dekodierung zur Gewinnung (415) eines dekodierten ersten Unterbandes (530) aus dem ersten Unterband (525);
- Verwendung (420) des ersten Zwischen-Unterbandes (520) und des dekodierten ersten Unterbandes (530) zur Bestimmung erster Ausrichtungen (OLL) zur Verwendung für die Erzeugung eines hochpassgefilterten Unterbandes aus dem ersten Zwischen-Unterband (520) ;
- Verwendung (425) der ersten Ausrichtungen (OLL) zur Hochpassfilterung des ersten Zwischen-Unterbandes (520) für die Erzeugung eines zweiten Unterbandes (535) der zweiten Auflösung;
- Kodierung und Dekodierung zur Gewinnung (430) eines dekodierten zweiten Unterbandes (540) aus dem zweiten Unterband (535);
- Rekonstruierung (435) des ersten Zwischen-Unterbandes unter Verwendung des ersten dekodierten Unterbandes (530), des zweiten dekodierten Unterbandes (540) und der ersten Ausrichtungen (OLL) durch invers ausgerichtete Filterung zur Gewinnung eines rekonstruierten ersten Zwischen-Unterbandes (545);
- Verwendung (440) des rekonstruierten ersten Zwischen-Unterbandes (545) und des mehrdimensionalen digitalen Signals (505) zur Bestimmung zweiter Ausrichtungen (OH) für die Hochpassfilterung des mehrdimensionalen digitalen Signals (505) in der zweiten Dimension;
- Generierung (445) eines zweiten Zwischen-Unterbandes (515) mit einer Zwischen-Auflösung durch Hochpassfilterung des mehrdimensionalen digitalen Signals (505) in der zweiten Dimension durch Verwendung der zweiten Ausrichtungen (OH);
- Verwendung (450) des rekonstruierten ersten Zwischen-Unterbandes (545) und des zweiten Zwischen-Unterbandes (515) zur Bestimmung dritter Ausrichtungen (OHH) zur Verwendung für die Erzeugung eines hochpassgefilterten Unterbandes aus dem zweiten Zwischen-Unterband (515);

- Verwendung (455) der dritten Ausrichtungen (OHH) zur Hochpassfilterung des zweiten Zwischen-Unterbandes (515) zur Gewinnung eines dritten Unterbandes (550) der zweiten Auflösung; und
- Generierung (460) eines vierten Unterbandes (555) der zweiten Auflösung durch Tiefpassfilterung des zweiten Zwischen-Unterbandes (515).

2. Verfahren gemäß Anspruch 1, wobei die Schritte (410, 415) zur Erzeugung des dekodierten ersten Unterbandes (530) umfassen:

- einen Schritt (410) der Verwendung eines Tiefpassfilters und einer Unterabtastung in einer ersten Dimension des mehrdimensionalen digitalen Signals (505), gefolgt von der Verwendung eines Tiefpassfilters und einer Unterabtastung in einer zweiten Dimension des ersten Zwischen-Unterbandes, wobei die zweite Dimension orthogonal zur ersten Dimension ist, zur Gewinnung des ersten Unterbandes (525), welches ein unterabgetastetes tiefpassgefiltertes Unterband ist, und
- einen Schritt (415) der Quantisierung und De-Quantisierung des unterabgetasteten tiefpassgefilterten Unterbandes (525).

3. Verfahren gemäß einem der Ansprüche 1 oder 2, wobei, für jede zu analysierende Abtastung eines Unterbandes, zumindest einer der Schritte (420, 440, 450) zur Bestimmung der Ausrichtungen das Auswählen einer Ausrichtung umfasst, die die Amplitude zumindest einer Abtastung eines anderen Unterbandes bei dessen Filterung unter Verwendung der Ausrichtung minimiert.

4. Verfahren gemäß einem der Ansprüche 1 bis 3, wobei die Schritte (455, 460) zur Generierung zumindest eines der dritten oder vierten Unterbänder (550, 555) der zweiten Auflösung, basierend auf den zweiten oder dritten Ausrichtungen (OH, OHH), einen Schritt (445, 455) des Verwendens von Hochpassfiltern, deren Ausrichtung auf der zweiten oder dritten Ausrichtung (OH, OHH) basiert und des Unterabtastens in einer Dimension des mehrdimensionalen digitalen Signals (505) umfasst.

5. Verfahren gemäß Anspruch 1, wobei der Schritt zur Generierung (455) des dritten Unterbandes (550) einen Schritt (455) des Verwendens von Hochpassfiltern, deren Ausrichtung auf den dritten Ausrichtungen (OHH) basiert, für das zweite Zwischen-Unterband (515) und des Unterabtastens in einer Dimension des mehrdimensionalen digitalen Signals (505) umfasst.

6. Verfahren gemäß einem der Ansprüche 1 bis 5, zusätzlich der Beinhaltung eines Schrittes (465) zur Kodierung der bestimmten Ausrichtungen (OLL, OH, OHH) unter Verwendung eines verlustfreien Kodierens.

7. Vorrichtung (300) zur Kodierung eines mehrdimensionalen Signals (505) einer ersten Auflösung in Unterbänder einer zweiten Auflösung, die niedriger als die erste Auflösung ist, wobei die Vorrichtung Mittel (303, 306, 312, 316) aufweist zur:

- Generierung (410) eines ersten Zwischen-Unterbandes (520) einer Zwischen-Auflösung durch die Tiefpassfilterung des mehrdimensionalen digitalen Signals (505) in einer ersten Dimension, wobei die Zwischen-Auflösung höher ist als die zweite Auflösung und niedriger ist als die erste Auflösung;
- Generierung (410) eines ersten Unterbandes (525) von der zweiten Auflösung durch Tiefpassfilterung des ersten Zwischen-Unterbandes (520) in der ersten Dimension;
- Kodierung und Dekodierung zur Gewinnung (415) eines dekodierten ersten Unterbandes (530) aus dem ersten Unterband (525);
- Verwendung (420) des ersten Zwischen-Unterbandes (520) und des dekodierten ersten Unterbandes (530) zur Bestimmung erster Ausrichtungen (OLL) zur Verwendung für die Erzeugung eines hochpassgefilterten Unterbandes aus dem ersten Zwischen-Unterband (520) ;
- Verwendung (425) der ersten Ausrichtungen (OLL) zur Hochpassfilterung des ersten Zwischen-Unterbandes (520) zur Erzeugung eines zweiten Unterbandes (535) aus der zweiten Auflösung;
- Kodierung und Dekodierung zur Gewinnung (430) eines dekodierten zweiten Unterbandes (540) aus dem zweiten Unterband (535);
- Rekonstruierung (435) des ersten Zwischen-Unterbandes durch Verwendung des ersten dekodierten Unterbandes (530), des zweiten dekodierten Unterbandes (540) und der ersten Ausrichtungen (OLL) durch invers ausgerichtete Filterung zur Gewinnung eines rekonstruierten Zwischen-Unterbandes (545);
- Verwendung (440) des rekonstruierten Zwischen-Unterbandes (545) und des mehrdimensionalen digitalen Signals (505) zur Bestimmung zweiter Ausrichtungen (OH) zur Hochpassfilterung des mehrdimensionalen digitalen Signals (505) in der zweiten Dimension;

- Generierung (445) eines zweiten Zwischen-Unterbandes (515) einer Zwischen-Auflösung durch Hochpassfilterung des mehrdimensionalen digitalen Signals (505) in der zweiten Dimension unter Verwendung der zweiten Ausrichtungen (OH);

- Verwendung (450) des rekonstruierten ersten Zwischen-Unterbandes (545) und des zweiten Zwischen-Unterbandes (515) zur Bestimmung dritter Ausrichtungen (OHH) zur Verwendung für die Erzeugung eines hochpassgefilterten Unterbandes von dem zweiten Zwischen-Unterband (515);

- Verwendung (455) der dritten Ausrichtungen (OHH) zur Hochpassfilterung des zweiten Zwischen-Unterbandes (515) zur Gewinnung eines dritten Unterbandes (550) der zweiten Auflösung; und

- Generierung (460) eines vierten Unterbandes (555) der zweiten Auflösung durch Tiefpassfilterung des zweiten Zwischen-Unterbandes (515).

**8.** Auf ein Computersystem (300) ladbares Computerprogrammprodukt, welches Instruktionen enthält, die den Computer veranlassen die Schritte des Kodierungsverfahrens, gemäß den Ansprüchen 1 bis 6, auszuführen, wenn das Programm durch ein Computersystem geladen und ausgeführt wird.

**9.** Von einem Computer (300) oder Mikroprozessor (303) lesbarer Informationsträger (306, 312, 316), herausnehmbar oder nicht, der Instruktionen eines Computerprogramms trägt, welches, wenn es durch einen Computer oder Mikroprozessor ausgeführt wird, den Computer oder den Mikroprozessor dazu veranlasst die Schritte des Kodierungsverfahrens gemäß den Ansprüchen 1 bis 6 auszuführen.

## Revendications

**1.** Procédé de codage d'un signal numérique multidimensionnel (505) d'une première résolution en sous-bandes (525, 535, 550, 555) d'une seconde résolution qui est inférieure à la première résolution, comprenant les étapes consistant à :

- générer (410) une première sous-bande intermédiaire (520) de résolution intermédiaire par application d'un filtrage passe-bas au signal numérique multidimensionnel (505) dans une première dimension, la résolution intermédiaire étant supérieure à la seconde résolution et inférieure à la première résolution ;

- générer (410) une première sous-bande (525) de la seconde résolution par application d'un filtrage passe-bas à la première sous-bande intermédiaire (520) dans la première dimension ;

- exécuter un codage et un décodage afin d'obtenir (415) une première sous-bande décodée (530) à partir de la première sous-bande (525) ;

- utiliser (420) la première sous-bande intermédiaire (520) et la première sous-bande décodée (530) pour déterminer des premières orientations (OLL) à utiliser pour produire une sous-bande ayant fait l'objet d'un filtrage passe-haut à partir de la première sous-bande intermédiaire (520) ;

- utiliser (425) les premières orientations (OLL) pour appliquer un filtrage passe-haut à la première sous-bande intermédiaire (520) de façon à produire une deuxième sous-bande (535) de la seconde résolution ;

- exécuter un codage et un décodage afin d'obtenir (430) une seconde sous-bande décodée (540) à partir de la deuxième sous-bande (535) ;

- reconstruire (435) la première sous-bande intermédiaire au moyen de la première sous-bande décodée (530), de la seconde sous-bande décodée (540), et des premières orientations (OLL) par un filtrage à orientation inverse de façon à obtenir une première sous-bande intermédiaire reconstruite (545) ;

- utiliser (440) la première sous-bande intermédiaire reconstruite (545) et le signal numérique multidimensionnel (505) pour déterminer des deuxièmes orientations (OH) de filtrage passe-haut du signal numérique multidimensionnel (505) dans la seconde dimension ;

- générer (445) une seconde sous-bande intermédiaire (515) de résolution intermédiaire par application d'un filtrage passe-haut au signal numérique multidimensionnel (505) dans la seconde dimension au moyen des deuxièmes orientations (OH) ;

- utiliser (450) la première sous-bande intermédiaire reconstruite (545) et la seconde sous-bande intermédiaire (515) pour déterminer des troisièmes orientations (OHH) à utiliser pour produire une sous-bande ayant fait l'objet d'un filtrage passe-haut à partir de la seconde sous-bande intermédiaire (515) ;

- utiliser (455) les troisièmes orientations (OHH) pour appliquer un filtrage passe-haut à la seconde sous-bande intermédiaire (515) de façon à obtenir une troisième sous-bande (550) de la seconde résolution ; et

- générer (460) une quatrième sous-bande (555) de la seconde résolution par application d'un filtrage passe-bas à la seconde sous-bande intermédiaire (515).

**2.** Procédé selon la revendication 1, dans lequel les étapes (410, 415) d'obtention de la première sous-bande décodée (530) comprennent :

- une étape (410) consistant à appliquer un filtrage passe-bas et un sous-échantillonnage dans une première dimension au signal numérique multidimensionnel (505) puis à appliquer un filtrage passe-bas et un sous-échantillonnage dans une seconde dimension à la première sous-bande intermédiaire, la seconde dimension étant perpendiculaire à la première dimension, de façon à obtenir la première sous-bande (525), qui est une sous-bande ayant fait l'objet d'un filtrage passe-bas sous-échantillonnée, et
- une étape (415) consistant à quantifier et à déquantifier la sous-bande ayant fait l'objet d'un filtrage passe-bas sous-échantillonnée (525).

**3.** Procédé selon l'une quelconque des revendications 1 ou 2, dans lequel au moins une étape (420, 440, 450) de détermination d'orientation comprend, pour chaque échantillon d'une sous-bande à analyser, la sélection d'une orientation qui réduit au minimum l'amplitude d'au moins un échantillon d'une autre sous-bande lorsqu'elle est filtrée au moyen de ladite orientation.

**4.** Procédé selon l'une quelconque des revendications 1 à 3, dans lequel les étapes (455, 460) de génération d'au moins l'une des troisième ou quatrième sous-bandes (550, 555) de la seconde résolution basée sur les deuxièmes ou troisièmes orientations (OH, OHH) comprend une étape (445, 455) consistant à utiliser des filtres passe-haut orientés sur la base des deuxièmes ou troisièmes orientations (OH, OHH) et un sous-échantillonnage dans une dimension du signal numérique multidimensionnel (505).

**5.** Procédé selon la revendication 1, dans lequel l'étape de génération (455) de la troisième sous-bande (550) comprend une étape (455) consistant à utiliser des filtres passe-haut orientés sur la base des troisièmes orientations (OHH) sur la seconde sous-bande intermédiaire (555) et un sous-échantillonnage dans une dimension du signal numérique multidimensionnel (505).

**6.** Procédé selon l'une quelconque des revendications 1 à 5, comprenant en outre une étape (465) consistant à coder les orientations déterminées (OLL, OH, OHH) au moyen d'un codage sans perte.

**7.** Dispositif (300) de codage d'un signal numérique multidimensionnel (505) d'une première résolution en sous-bandes d'une seconde résolution qui est inférieure à la première résolution, le dispositif comprenant des moyens (303, 306, 312, 316) destinés à :

- générer (410) une première sous-bande intermédiaire (520) de résolution intermédiaire par application d'un filtrage passe-bas au signal numérique multidimensionnel (505) dans une première dimension, la résolution intermédiaire étant supérieure à la seconde résolution et inférieure à la première résolution ;
- générer (410) une première sous-bande (525) de la seconde résolution par application d'un filtrage passe-bas à la première sous-bande intermédiaire (520) dans la première dimension ;
- exécuter un codage et un décodage afin d'obtenir (415) une première sous-bande décodée (530) à partir de la première sous-bande (525) ;
- utiliser (420) la première sous-bande intermédiaire (520) et la première sous-bande décodée (530) pour déterminer des premières orientations (OLL) à utiliser pour produire une sous-bande ayant fait l'objet d'un filtrage passe-haut à partir de la première sous-bande intermédiaire (520) ;
- utiliser (425) les premières orientations (OLL) pour appliquer un filtrage passe-haut à la première sous-bande intermédiaire (520) de façon à produire une deuxième sous-bande (535) de la seconde résolution ;
- exécuter un codage et un décodage (430) afin d'obtenir une seconde sous-bande décodée (540) à partir de la deuxième sous-bande (535) ;
- reconstruire (435) la première sous-bande intermédiaire au moyen de la première sous-bande décodée (530), de la seconde sous-bande décodée (540), et des premières orientations (OLL) par un filtrage à orientation inverse de façon à obtenir une sous-bande intermédiaire reconstruite (545) ;
- utiliser (440) la sous-bande intermédiaire reconstruite (545) et le signal numérique multidimensionnel (505) pour déterminer des deuxièmes orientations (OH) de filtrage passe-haut du signal numérique multidimensionnel (505) dans la seconde dimension ;
- générer (445) une seconde sous-bande intermédiaire (515) de résolution intermédiaire par application d'un filtrage passe-haut au signal numérique multidimensionnel (505) dans la seconde dimension au moyen des deuxièmes orientations (OH) ;
- utiliser (450) la première sous-bande intermédiaire reconstruite (545) et la seconde sous-bande intermédiaire (515) pour déterminer des troisièmes orientations (OHH) à utiliser pour produire une sous-bande ayant fait l'objet d'un filtrage passe-haut à partir de la seconde sous-bande intermédiaire (515) ;
- utiliser (455) les troisièmes orientations (OHH) pour appliquer un filtrage passe-haut à la seconde sous-bande intermédiaire (515) de façon à obtenir une troisième sous-bande (550) de la seconde résolution ; et
- générer (460) une quatrième sous-bande (555) de la seconde résolution par application d'un filtrage passe-bas à la seconde sous-bande intermédiaire (515).

**8.** Produit programme informatique pouvant être chargé dans un système informatique (300), ledit programme contenant des instructions amenant l'ordinateur à exécuter les étapes du procédé de codage selon l'une quelconque des revendications 1 à 6 lorsque ledit programme est chargé et exécuté par le système informatique.

**9.** Support d'informations (306, 312, 316) lisible par un ordinateur (300) ou par un microprocesseur (303), amovible, ou non, comprenant des instructions d'un programme informatique qui, lorsqu'elles sont exécutées par l'ordinateur ou par le microprocesseur, amènent l'ordinateur ou le microprocesseur à exécuter les étapes du procédé de codage selon l'une quelconque des revendications 1 à 6.

Figure 1

Figure 2

Figure 3

| | |
|---|---|
| Selection of the sub-band to decompose | 405 |
| Extraction of a sub-band L of intermediate resolution and a sub-band LL of lower resolution | 410 |
| Simulation of the coding and decoding of sub-band LL to obtain sub-band LLdec | 415 |
| Use source sub-band LLdec and target sub-band L to determine orientations OLL | 420 |
| Use orientations OLL to decompose sub-band L into sub-band LH of lower resolution | 425 |
| Simulation of the coding and decoding of sub-band LH into sub-band LHdec of lower resolution | 430 |
| Use of sub-bands LLdec and LHdec to generate sub-band Ldec of intermediate resolution | 435 |
| Use source sub-band Ldec and target sub-band I to generate orientations OH. | 440 |
| Use orientations OH to decompose original sub-band into sub-band H | 445 |
| Use source sub-band Ldec and target sub-band H of intermediate resolution to generate orientations OHH. | 450 |
| Use orientations OHH to decompose sub-band H into sub-band HH of lower resolution | 455 |
| Decompose sub-band H into sub-band HL of lower resolution | 460 |
| Coding | 465 |

Figure 4

Figure 5

```
┌─────────────────────────────────────────────────────────┐
│                       Decoding                          │──── 605
└─────────────────────────────────────────────────────────┘
                            │
                            ▼
┌─────────────────────────────────────────────────────────┐
│  Use orientations OLL to combine sub-bands              │
│  LHdec and LLdec of lower resolution into sub-          │──── 610
│  band Ldec of intermediate resolution                   │
└─────────────────────────────────────────────────────────┘
                            │
                            ▼
┌─────────────────────────────────────────────────────────┐
│  Use orientations OHH to combine sub-bands              │
│  HLdec and HHdec of lower resolution into sub-          │──── 615
│  band Hdec of intermediate resolution                   │
└─────────────────────────────────────────────────────────┘
                            │
                            ▼
┌─────────────────────────────────────────────────────────┐
│  Use orientations OH to combine sub-bands               │
│  Ldec and Hdec of intermediate resolution into          │──── 620
│  sub-band Idec of high resolution                       │
└─────────────────────────────────────────────────────────┘
```

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1911293 A

- FR 2906093